# EUROPEAN PATENT SPECIFICATION

(11) **EP 0 571 234 B1**
(45) Date of publication and mention of the grant of the patent: **15.07.1998**
(21) Application number: 93303984.4
(22) Date of filing: 21.05.1993
(51) Int. Cl.: F23C 11/02, F23C 6/04

(54) **Process for decreasing N2O emissions from a fluidized bed reactor**
Verfahren zur Verminderung von N20-Emissionen eines Wirbelschichtreaktors
Procédé pour diminuer des émissions de N20 d'un réacteur à lit fluidisé

(30) Priority: 22.05.1992 US 886892
(43) Date of publication of application: 24.11.1993
(73) Proprietor: FOSTER WHEELER ENERGY CORPORATION, Clinton New Jersey 08809-4000 (US)
(72) Inventor: Garcia-Mallol, Juan Antonio, Morristown, New Jersey 08809 (US)
(74) Representative: Rackham, Anthony Charles

(56) References cited:
- WO-A-81/01873
- WO-A-91/05205
- US-A- 4 773 339
- US-A- 4 809 623
- US-A- 4 813 381

## Description

This invention relates to a method of operating a fluidized bed reactor to decrease emissions of nitrous oxide (N₂O) (such a process is known from WO-A-9 105 205) while maintaining efficient sulphur capture in the reactor.

Bubbling and circulating fluidized bed reactors offer advantages in pollution control. For example, the emissions of NOₓ from fluidized bed reactors are relatively low compared to emissions from other conventional systems such as gas-fired systems and coal-fired power plants. Staged combustion in fluidized bed reactors permits even lower NOₓ emission levels to be achieved. Methods of operating a fluidized bed reactor using staged combustion to lower emissions of NOₓ are disclosed in United States Patents Nos. 4,308,810 and 4,773,339.

However, fluidized beds are not without problems. For example, there has been recent concern regarding the emissions of N₂O from fluidized bed reactors. It has been discovered that N₂O may act as an ozone layer scavenger, and N₂O is not readily broken down once released to the atmosphere. Currently, emissions of NOₓ and oxides of sulphur (SOₓ) are legislatively regulated and, in light of the adverse effects of N₂O on the ozone layer, it is likely that emissions of N₂O will also be regulated soon.

It has also been recently discovered that, although emissions of NOₓ by circulating fluidized bed reactors are relatively low compared to other conventional combustors, emissions of N₂O by circulating fluidized bed reactors can be significant. For example, N₂O emission levels from circulating fluidized bed reactors may typically be within the range of 50-200 ppm, whereas N₂O emission levels from boilers equipped with other devices may typically be within the range of 1-20 ppm. It is therefore important to reduce the emissions of N₂O from circulating fluidized bed reactors while simultaneously maintaining low emission levels for NOₓ and SOₓ.

Emissions of N₂O by bubbling fluidized beds is not thought to be as significant a problem as with circulating fluidized beds, nonetheless bubbling fluidized beds are falling into disfavour because of problems with lowering SOₓ emissions to acceptable values.

It is an object of the present invention to provide a method of operating a fluidized bed reactor in which the emissions of N₂O are lowered while permitting sulphur capture by sorbent particles in the reactor.

According to the invention there is provided a method of operating a fluidised bed reactor to simultaneously lower emissions of N₂O, NOₓ and SOₓ, comprising providing a bed of particulate material in the lower region of a furnace, the bed containing nitrogen-containing fuel particles for combustion and sorbent particles for sulphur capture, introducing a primary, oxygen-containing gas into that lower region of the furnace to fluidise the bed of particulate material and to cause a portion of the particulate material to pass from the lower region to an upper region of the furnace, and maintaining the lower region at a temperature below approximately 1600°F (about 871°C) to lower emissions of NOₓ, characterised in that the ratio of relatively fine to relatively coarse particulate material in the lower region is controlled to maintain a predetermined temperature in the upper region for reducing emissions of N₂O formed during combustion while permitting efficient sulphur capture to lower SOₓ emissions, and in that the lower region of the furnace is operated under substoichiometric conditions such that combustion of the fuel particles is incomplete and a secondary oxygen containing gas is introduced above this lower region and below the upper region so that the upper region of the furnace is operated under oxidising conditions. to complete combustion of the fuel particles in that upper region.

The temperature in the upper region of a furnace section is preferably maintained at 1650 to 1800°F (approximately 899 to 982°C) for destroying N₂O while permitting sulphur capture by sorbent particles.

In one embodiment of the invention the temperature in the upper region is maintained by controlling the amount of particulate material entrained from a lower region of the furnace section to the upper region.

According to the invention the method of operating a fluidized bed reactor enables emissions of N₂O, NOₓ and SOₓ to be simultaneously lowered without the need for significant amounts of additional material or equipment which add to the cost and complexity of the reactor.

Preferably the fluidized furnace section has a lower dense fluidized bed of particulate material, comprising nitrogen-containing carbonaceous fuel particles, sorbent particles, and solid products of combustion, and an upper dispersed entrained bed of the particulate material.

The lower region of the furnace section is operated under substoichiometric conditions so that combustion of the fuel particles is incomplete to inhibit N₂O and NOₓ formation. The upper region of the furnace section, above the substoichiometric lower region, is operated under oxidizing conditions to complete combustion of the fuel particles.

The amount of particulate material in the upper region of the furnace section is controlled to maintain a temperature in the upper region (see also US-A-4 813 381) which will destroy N₂O formed during combustion. The level at which that temperature is maintained can be the level at which the secondary oxygen containing gas is introduced into the furnace. The temperature in the upper region is also controlled to permit sulphur capture by the sorbent particles.

In one embodiment of the invention one introduces additional sorbent particles to the furnace section to replenish the sorbent particles, and the ratio of relatively fine to relatively coarse particulate material in the lower region is controlled by controlling the size of the additional sorbent particles. In other embodiment one introduces additional fuel particles to replenish the fuel particles and the ratio of relatively fine to relatively coarse particulate material in the lower region is controlled by controlling the size of the additional fuel particles.

In a further embodiment entrained particulate material from the upper region is separated into two portions and the ratio of relatively fine to relatively coarse particulate material in the lower region is controlled by controlling the first portion of the separated particulate material which is returned to the lower region. The second portion of the separated particulate material can be passed to external equipment.

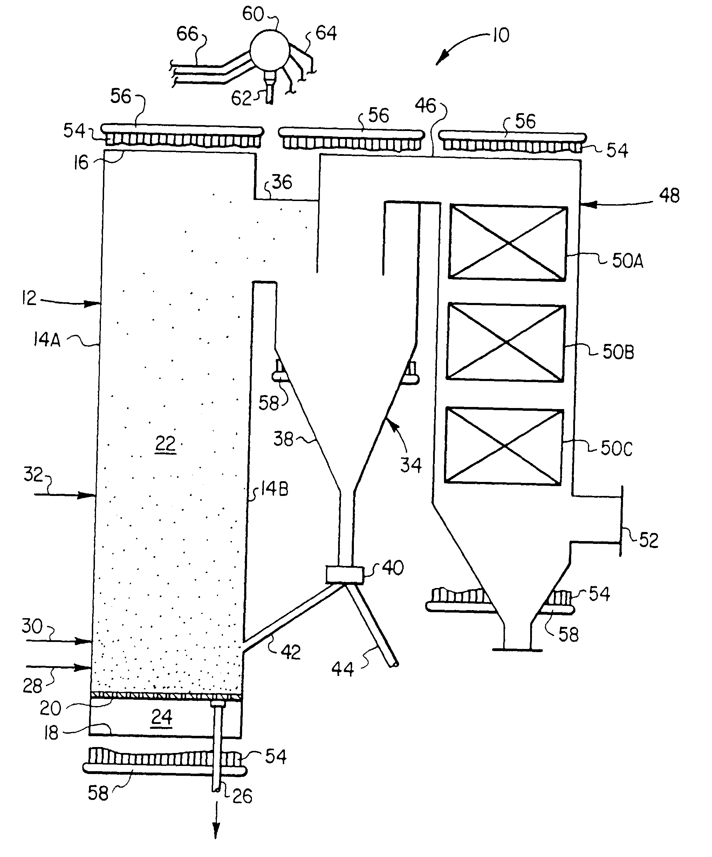

The invention will now be described, by way of example, with reference to the accompanying drawing which is a schematic view depicting a fluidized bed reactor which may be used in the process of the present invention.

A fluidized bed reactor 10 used for the generation of steam includes an enclosure 12 having a front wall 14A, a spaced, parallel rear wall 14B, two spaced side walls (not shown) which extend perpendicular to the front and rear walls, a roof 16, and a floor 18, which together form a substantially rectangular enclosure.

A lower portion of the enclosure 12 is divided by a perforated distribution plate 20 into an upper furnace section 22 and a lower plenum chamber 24. The distribution plate 20 is suitably supported at the lower portion of the enclosure 12 and supports a bed of particulate material which may include nitrogen-containing carbonaceous fuel particles, such as coal, for combustion; sorbent particles, typically a calcium-containing sulphur acceptor such as limestone, lime, or dolomite, for the capture of SOₓ released during combustion of the fuel particles; and solid products of combustion.

The plenum chamber 24 receives a primary pressurized oxygen-containing gas such as air from a conventional, suitable source (not shown), such as a forced-draft blower or the like. The primary gas introduced into the plenum chamber 24 passes in an upward direction through the distribution plate 20 to support combustion and fluidize the particulate material in the furnace section 22.

A drain pipe 26 registers with an opening in the distribution plate 20 and extends through the plenum chamber 24 for discharging spent and unspent particulate material from the furnace section 22, for reasons to be described.

Conduits 28 and 30 supply particulate fuel and sorbent particles to the furnace section 22. It is understood that any number of arrangements for providing fuel and sorbent particles to the furnace section 22 of the enclosure 12 may be used. Examples of a few arrangements that may be used are disclosed in U.S. Patent No. 4,936,770.

At least one port 32 is provided through the walls of the enclosure 12 at a predetermined level to introduce a secondary oxygen-containing gas such as air into the furnace section 22, for reasons to be described. It is understood that additional ports (not shown) may be provided through the walls of the enclosure 12 at one or more levels or that other conventional means of introducing a secondary gas into the furnace section may be used.

A cyclone separator 34 extends adjacent the enclosure 12 and is connected thereto via a duct 36 extending from an outlet provided in an upper portion of the rear wall 14B of the enclosure 12 to an inlet provided through the separator wall. The lower portion of the separator 34 includes a hopper section 38 which is connected to a diverter device, or valve, 40 having a recycle conduit 42 and an extraction conduit 44 extending therefrom. The recycle conduit 42 extends through a lower portion of the rear wall 14B of the enclosure 12, and the extraction conduit 44 is adapted for connection to external equipment (not shown). The valve 40 operates in a conventional manner to vary the proportional flow of separated particulate material between the conduits 42 and 44, as will be described below.

The separator 34 receives flue gases and entrained particulate material from the furnace section 22 and operates in a conventional manner to disengage the entrained particulate material from the flue gases. The separated particulate material falls to the hopper section 38 of the separator 34 and passes to the valve 40 for being directed to the recycle conduit 42 and the extraction conduit 44. Although reference is made to one separator 34, it is understood that one or more additional separators (not shown) may be used with the reactor 10. The number and size of separators 34 used is determined by the capacity of the steam generator and economic considerations.

The separated flue gases, which are substantially free of particulate material, pass via a duct 46, located immediately above the separator 34, into a heat recovery section shown in general by the reference numeral 48. A plurality of heat exchange surfaces 50A, 50B, 50C are disposed in the heat recovery section 48, all of which are formed by a plurality of heat exchange tubes which extend in the path of the separated flue gases as the separated flue gases pass through the heat recovery section 48. The heat exchange surfaces 50A, 50B, 50C may serve as reheaters, superheaters, economizers, or the like, as desired. After passing across the heat exchange surfaces 50A, 50B, 50C, the separated flue gases exit the heat recovery section 48 through outlet 52.

The walls of the enclosure 12, the separator 34, and the heat recovery section 48 are formed by a plurality of vertically extending, spaced, parallel tubes interconnected by fins to form contiguous airtight structures. Portions of the finned tubes are shown schematically in the drawing, shown in general by the reference numeral 54, but since this type of structure is conventional, it will not be shown or described in further detail. The ends of each of these finned tubes 54 are connected to a plurality of horizontally disposed upper and lower headers 56 and 58, respectively.

A steam drum 60 is located above the enclosure 12, the separator 34, and the heat recovery section 48. The steam drum 60 receives a cooling fluid such as water from a feed pipe (not shown ), and a plurality of downcomers 62, and pipes 64, 66 extend from the steam drum 60 and are utilized, along with connecting feeders, risers, headers, etc., to establish a fluid flow circuit which includes the finned tubes 54 forming the aforeamentioned walls and the heat exchange surfaces 50A, 50B, 50C in the heat recovery section 48. Water may be passed in a predetermined sequence through this fluid flow circuitry to convert the water to steam and to heat the steam with the heat generated by the combustion of the fuel particles.

In operation, nitrogen-containing carbonaceous fuel particles, such as coal, and sorbent particles, typically a calcium-containing sulphur acceptor such as limestone, lime, or dolomite, are introduced into the furnace section 22 via conduits 28 and 30. A primary, oxygen-containing gas, such as air, from an external source is introduced at a relatively high pressure into the plenum chamber 24 and is passed upwardly through the distribution plate 20 at a relatively high fluidizing velocity to fluidize the particulate material in the furnace section 22. A light-off burner (not shown) or the like ignites the fuel articles, and thereafter the fuel particles are self-combusted by the heat in the furnace section 22, thereby generating gaseous and solid products of combustion.

The fluidizing velocity of the primary air is then controlled to maintain a dense bed of particulate material in a lower portion of the furnace section 22 and to pass or entrain an amount of the particulate material upwardly from the dense bed to form a dispersed bed above the dense bed. The dispersed bed includes a solids reflux region, which is located immediately above the dense bed and which may extend several feet above the dense bed, and a pneumatic transport region, which is located above the solids reflux region and which extends upwardly to the roof 16 of the enclosure 12.

The solids reflux region has significant portions of particulate material passing upwardly and downwardly across the region. A first portion of the entrained particulate material in the solids reflux region is pneumatically transferred by the primary gas upwardly through the solids reflux region and into the pneumatic transport region, whereas a second portion of the particulate material in the solids reflux region is disengaged from the primary gas and falls back to the dense bed. In contrast, in the pneumatic transport region, substantially all of the entrained particulate material remains entrained and passes upwardly through the region to be discharged as described below.

The amount of oxygen supplied by the primary air is maintained below the theoretical amount of oxygen required for complete combustion of the fuel particles in a lower region, so the lower region of the furnace section 22 is operated under fuel rich or substoichiometric conditions in which combustion of fuel particles is incomplete. Operating under such substoichiometric conditions in the lower region inhibits formation of NOₓ and N₂O.

A secondary, or overfire, oxygen-containing gas, preferably air, is introduced into the furnace section 22 through the port 32. The secondary gas is preferably introduced into the furnace section 22 at a level above the dense bed and more preferably at a level immediately above the solids reflux region, for reasons to be described.

The amount of oxygen supplied by the secondary gas is maintained above the theoretical amount of oxygen required for complete combustion so that oxidizing conditions are maintained in the furnace section 22 from at or near the level at which the secondary gas is introduced into the furnace section 22 via the port 32 to the roof 16 of the enclosure 12. It is understood that the upper region is the region in the furnace section 22 from at or near the level at which the secondary gas is introduced into the furnace section 22 via the port 32 to the roof 16 of the enclosure 12. Enough oxygen is supplied by the secondary gas so that combustion of the fuel particles is substantially complete in the upper region.

The secondary gas mixes with the primary gas and gaseous products of combustion to form flue gases which pass upwardly through the upper region of the furnace section 22 with the entrained particulate material, and the flue gases and at least a portion of the entrained particulate material is discharged from the furnace section 22 to the separator 34 via duct 36. The discharged particulate material is separated from the flue gases in the separator 34 and is passed through the valve 40 which may be adjusted to vary the relative proportions of the separated particulate material entering the recycle conduit 42 and the extraction conduit 44 and, therefore, to vary the amounts of the separated particulate material being reintroduced into the furnace section 22, for reasons to be described.

The recycle conduit 42 preferably reintroduces the separated particulate material into the lower region of the furnace section 22. The operation of the valve 40 is further described in U.S. Patent No. 4,809,623, to which reference is made for a full description.

The separated flue gases exit the separator 34 via the duct 46 and pass to a heat recovery section 48. In the heat recovery section 48, the separated flue gases pass through the heat exchange surfaces 50A, 50B, 50C before exiting via outlet 52.

Water is passed through the feed pipe to the steam drum 60 and is then passed through the fluid flow circuit so that the heat generated by combustion is used to convert the water to steam and to superheat the steam.

Circulating fluidized beds are typically operated to avoid temperature excursions within the furnace section. This is often accomplished using relatively high internal and external recycling of particulate material which renders the furnace section insensitive to fuel heat release patterns, thereby minimizing temperature variations within the furnace section. In contrast, it has been discovered that temperature excursions resulting in increased temperatures in the upper region of a furnace section 22 are useful for destroying N₂O formed during combustion. Therefore, according to a feature of the present invention, temperature excursions are created and maintained within the furnace section 22 in simple, efficient, and inexpensive manners.

More particularly, according to the present invention, the lower region of the furnace section 22 is maintained at a relatively low temperature, preferably below 1600°F (about 871°C), to inhibit the formation of NOₓ and N₂O while a relatively high temperature, substantially within the range of 1650° to 1800°F (899 to 982°C), is created and maintained in the upper region of the furnace section 22 to further lower N₂O emissions. In normal operation, the temperature in the upper region will reach its maximum value at or near the level at which the secondary air is introduced into the furnace section 22 via the port 32 and will thereafter decrease upwardly across the upper region. References to creating or maintaining a particular temperature in the upper region will refer to the maximum temperature achieved in the upper region, which will typically occur at or near the level at which the secondary air is introduced into the furnace section 22 via the port 32.

Although it is preferred to maintain the temperature in the upper region at approximately 1800°F (about 982°C) to minimize emissions of N₂O, it will become impractical to maintain this temperature in the upper region as the load on the reactor 10 decreases. However, temperatures in the upper region substantially within the range of 1650 to 1800°F (about 899 to 982°C) will nonetheless provide satisfactory lowering of N₂O emissions in the upper region without significantly harming sulphur capture since this temperature range is sufficiently high to destroy N₂O yet sufficiently low to permit sulphur capture by the sorbent particles. Operating under these conditions will still permit efficient sulphur capture such that sulphur retention of approximately 90% or better may be obtained with a supply of sorbent particles sufficient to maintain a Ca/S molar ratio substantially within the range of 2:1 to 3:1. Higher temperatures are avoided because, at higher temperatures, the sulphates formed during sulphur capture tend to decompose back to SOₓ. Thermal NOₓ also tends to form at higher temperatures due to the burning of the nitrogen in the air.

The relatively high temperature, substantially within the range of 1650° to 1800°F (about 899 to 982°C), is maintained in the upper region of the furnace section 22 by controlling the amount of particulate material in the upper region of the furnace section. Particulate material in the upper region absorbs heat released by combustion thereby tending to lower the temperature in that region. For example, operating the furnace section 22 so that there is a relatively large amount of particulate material in the upper region, as is typically done in circulating fluidized bed reactors, tends to drive down the temperature in the upper region and tends to create a relatively uniform temperature across the furnace section. Conversely, if the furnace section is operated so that there is a relatively small amount of particulate material in the upper region (i.e., so that there is less particulate material in the upper region to absorb heat released by combustion in the upper region), the temperature in the upper region will increase substantially.

Therefore, by controlling the amount of particulate material in the upper region of the furnace section, one can control the temperature obtained in the upper region. Because the upper region begins at or near the level at which the secondary gas is introduced, and because it is desirable to maintain a relatively small amount of particulate material in the upper region for maintaining the desired temperature, the secondary gas is preferably introduced at a level above the dense bed and more particularly at a level above the solids reflux region. As mentioned earlier, the solids reflux region has a significant portion of particulate material passing downwardly across the region and returning to the dense bed. This falling particulate material carries with it heat absorbed in the solids reflux region and, therefore, tends to decrease temperatures obtained in that region.

According to the present method, the temperature in the upper region is controlled by controlling the amount of particulate material in the upper region of the furnace section 22, which is in turn controlled by controlling the amount of particulate material entrained or passed from the lower region to the upper region of the furnace section. This may be accomplished in a number of ways, a few of which are described below. For example, the fluidizing velocity of the primary gas may be controlled to control the amount of particulate material which passes from the lower region to the upper region of the furnace section. Increasing the fluidizing velocity will drive more particulate material from the lower region to the upper region and will thereby tend to decrease the temperature obtained in the upper region. Decreasing the fluidizing velocity will have the opposite effect.

The amount of particulate material which passes from the lower region to the upper region may also be controlled by controlling the size distribution of the particulate material in the lower region. For example, the particulate material in the lower region of the furnace section will be present in a ratio of relatively fine to relatively coarse particulate material, and the amount of particulate material which passes from the lower region to the upper region of the furnace section can be controlled by controlling the ratio of relatively fine to relatively coarse particulate material in the lower region.

More particularly, for any given fluidizing velocity of primary gas, if the ratio of relatively fine to relatively coarse particulate material in the lower region increases, the amount of particulate material which passes from the lower region to the upper region of the furnace section will also increase, thus lowering the temperature in the upper region. Decreasing the ratio of relatively fine to relatively coarse particulate material in the lower region will have the opposite effect.

The ratio of relatively fine to relatively coarse particulate material in the lower region of the furnace section 22 may also be controlled in a number of ways. For example, since proportionately more relatively coarse particulate material and less relatively fine particulate material will be present in a lower portion of the dense bed, draining particulate material from a lower portion of the dense bed will tend to remove proportionately more relatively coarse particulate material than relatively fine particulate material, thereby increasing the ratio of relatively fine to relatively coarse particulate material in the lower region. Therefore, increasing the amount of particulate material drained from a lower portion of the dense bed via the drain 26 may be used to increase the ratio of relatively fine to relatively coarse particulate material in the lower region of the furnace section, thereby increasing the amount of particulate material which is passed from the lower region to the upper region and, in turn, decreasing the temperature in the upper region. Decreasing the amount of particulate material drained from the drain 26 will have the opposite effect.

The ratio of relatively fine to relatively coarse particulate material in the lower region of the furnace section 22 may also be controlled by controlling the amount of particulate material recycled to the lower region of the furnace section 22 via the separator 34. The ratio of relatively fine to relatively coarse particulate material for the portion of the entrained particulate material discharged from the upper region of the furnace section 22 into the separator 34 will be substantially higher than the ratio of relatively fine to relatively coarse particulate material in the lower region. Accordingly, the ratio of relatively fine to relatively coarse particulate material in the lower region may be controlled by controlling the amount of separated particulate material returned from the separator 34 to the lower region of the furnace section 22. To this end, the valve 40 may be used to control the proportionate flow of separated particulate material to the recycle conduit 42 and the extraction conduit 44, thereby controlling the amount of separated particulate material returned from the separator 34 to the lower region of the furnace section 22.

More particularly, increasing the amount of separated particulate material returned from the separator 34 to the lower region of the furnace section 22 will increase the ratio of relatively fine to relatively coarse particulate material in the lower region. This will increase the amount of particulate material which is passed from the lower region to the upper region and will, in turn, decrease the temperature in the upper region. Decreasing the amount of separated particulate material returned from the separator 34 to the lower region of the furnace section 22 will have the opposite effect.

The ratio of relatively fine to relatively coarse particulate material in the lower region of the furnace section 22 may also be controlled by controlling the size of additional fuel and sorbent particles which are fed into the furnace section via conduits 28 and 30, respectively, to replenish spent and unspent fuel and sorbent particles. The additional fuel and sorbent particles fed into the furnace section have predetermined sizes which may be changed as desired so that the additional fuel or sorbent particles fed into the furnace section 22 are larger or smaller than the original predetermined sizes.

More particularly, decreasing the size of additional sorbent particles fed into the furnace section via the conduit 30 will increase the ratio of relatively fine to relatively coarse particulate material in the lower region, leading to an increase in the amount of particulate material passed from the lower region to the upper region and, in turn, to a decrease of the temperature in the upper region. Increasing the size of the additional sorbent particles fed into the furnace section 27 via the conduit 30 will have the opposite effect.

Similarly, the size of the additional fuel particles fed into the furnace section 22 via the conduit 28 may be decreased or increased as desired, thereby tending to decrease or increase the temperature in the upper region.

In addition to lowering emissions of N₂O by maintaining a relatively high temperature in the upper region, the amount of N₂O formed in the lower region may be decreased by increasing the amount of carbonaceous material in the lower region of the furnace section. When the additional fuel particles are fed into the furnace section 22 via the conduit 28 under the reducing conditions prevailing in the lower region, the additional fuel particles release combustible gases and are thereby devolatilized, leaving carbonaceous material in the lower region. The presence of carbonaceous material in the lower region inhibits formation of NOₓ and N₂O in the lower region.

Increasing the amount of carbonaceous material in the lower region of the furnace section therefore acts to decrease emissions of N₂O. In this regard, the amount of carbonaceous material present in the lower region of the furnace section may be increased by maintaining the fluidizing velocity of the primary gas constant while temporarily increasing the amount of additional fuel particles fed into the furnace section. In this manner, the emissions of N₂O may be further controlled.

Several advantages result from the foregoing method. For example, the emissions of N₂O, SOₓ, and NOₓ are lowered simultaneously. Additionally, N₂O emissions are controlled and lowered in a simple, efficient, and inexpensive manner by controlling the amount of particulate material passing from the lower region of the furnace section 22 to the upper region of the furnace section 22. Further, N₂O emissions are also lowered by increasing the amount of carbonaceous material in the lower region of the furnace section. The emissions of N₂O, SOₓ and NOₓ are thereby lowered simultaneously without the need for significant amounts of additional material or equipment which add to the cost and complexity of the reactor.

It is understood that variations may be made in the method of the present invention without departing from the scope of the invention as defined in the appended claims. For example, although it is preferred to introduce the secondary gas into the furnace section 22 at a level above the solids reflux region, it is understood that the secondary gas may be introduced at any number of levels in the furnace section and at more than one level in the furnace section. Additionally, the valve 40 need not be used in connection with the separator 34, and the separator may instead return all or none of the separated particulate material to the furnace section 22. Further, the separator 34 may return separated particulate material to the furnace section 22 in more than one location and at more than one level. The fluid flow circuitry may also use natural or forced circulation.

## Claims

1. A method of operating a fluidised bed reactor to simultaneously lower emissions of N₂O, NOₓ and SOₓ, comprising providing a bed of particulate material in the lower region of a furnace (22), the bed containing nitrogen-containing fuel particles for combustion and sorbent particles for sulphur capture, introducing a primary, oxygen-containing gas into that lower region of the furnace (22) to fluidise the bed of particulate material and to cause a portion of the particulate material to pass from the lower region to an upper region of the furnace, and maintaining the lower region at a temperature below approximately 1600°F (about 871°C) to lower emissions of NOₓ, characterised in that the ratio of relatively fine to relatively coarse particulate material in the lower region is controlled to maintain a predetermined temperature in the upper region for reducing emissions of N₂O formed during combustion while permitting efficient sulphur capture to lower SOₓ emissions, and in that the lower region of the furnace (22) is operated under substoichiometric conditions such that combustion of the fuel particles is incomplete and a secondary oxygen containing gas is introduced above this lower region and below the upper region so that the upper region of the furnace (22) is operated under oxidising conditions to complete combustion of the fuel particles in that upper region.

2. The method of Claim 1 in which the lower region of the bed comprises a solids reflux region above a dense region and a pneumatic transport region above the solids reflux region, and in which the level at which the secondary oxygen-containing gas is introduced into the furnace (22) is above that solids reflux region.

3. The method of either preceding claim in which the said predetermined temperature is from 1650 to 1800°F (about 899 to 982°C).

4. The method of Claim 1 or Claim 2 in which the said predetermined temperature is approximately 1800°F (about 982°C).

5. The method of any preceding claim in which the ratio of relatively fine to relative coarse particulate material passed from the lower region is controlled by controlling the ratio of relatively fine to relatively coarse particulate material in the lower region.

6. The method of any of claims 1 to 4 in which the ratio of relatively fine to relatively coarse particulate material passed from the lower region is controlled by controlling drainage of particulate material from a lower portion of the lower region.

7. The method in any of claims 1 to 4 comprising discharging flue gases and entrained particulate material from the upper region of the furnace end separating the discharged particulate material from the discharged flue gases, and in which the ratio of relatively fine to relatively coarse particulate material passed from the lower region is controlled by controlling the portion of separated particulate material which is reintroduced into the lower region.

8. The method of any preceding claim in which fuel particles are devolatilised in the lower region to form carbonaceous material in that lower region, and in which the carbonaceous material in that lower region is controlled to inhibit formation of N₂O.

9. The method of Claim 8 in which
said fuel particles are introduced into said furnace section at a predetermined rate;
said primary gas is introduced into said furnace section at a fluidising velocity; and
said carbonaceous material in said lower region is controlled by maintaining said fluidising velocity of said primary gas constant while said rate at which said fuel particles are introduced is temporarily increased to increase said carbonaceous material in said lower region.

## Patentansprüche

1. Verfahren zum Betreiben eines Wirbelschichtreaktors zum gleichzeitigen Senken der Emissionen von N₂O, NOₓ und SOₓ, umfassend die folgenden Schritte: Bereitstellen einer Schicht aus partikulärem Material im unteren Bereich eines Ofens (22), wobei die Schicht stickstoffhaltige Brennstoffpartikel für die Verbrennung und Sorptionspartikel für die Schwefelaufnahme enthält, Einleiten eines primären, sauerstoffhaltigen Gases in diesen unteren Bereich des Ofens (22), um die Schicht aus partikulärem Material zu fluidisieren und um einen Teil des partikulären Materials vom unteren Bereich zu einem oberen Bereich des Ofens strömen zu lassen, und Aufrechterhalten einer Temperatur unter etwa 1600°F (etwa 871°C) im unteren Bereich, um NOₓ-Emissionen zu senken, dadurch gekennzeichnet, daß das Verhältnis von relativ feinem zu relativ grobem partikulärem Material im unteren Bereich geregelt wird, um eine vorgegebene Temperatur im oberen Bereich aufrechtzuerhalten, um Emissionen von während der Verbrennung entstandenem N₂O zu reduzieren und gleichzeitig eine effiziente Schwefelaufnahme zum Verringern von SOₓ-Emissionen zu ermöglichen, und dadurch, daß der untere Bereich des Ofens (22) unter substöchiometrischen Bedingungen betrieben wird, so daß die Verbrennung der Brennstoffpartikel unvollständig ist, und ein sekundäres, sauerstoffhaltiges Gas über diesem unteren Bereich und unter dem oberen Bereich eingeleitet wird, so daß der obere Bereich des Ofens (22) unter oxidierenden Bedingungen betrieben wird, um die Verbrennung der Brennstoffpartikel in diesem oberen Bereich zu vervollständigen.

2. Verfahren nach Anspruch 1, bei dem der untere Bereich der Schicht einen Feststoffrücklaufbereich über einem dichten Bereich und einen Drucklufttransportbereich über dem Feststoffrücklaufbereich umfaßt und bei dem die Höhe, in der das sekundäre sauerstoffhaltige Gas in den Ofen (22) eingeleitet wird, über diesem Feststoffrücklaufbereich liegt.

3. Verfahren nach einem der vorherigen Ansprüche, bei dem die genannte vorgegebene Temperatur zwischen 1650 und 1800°F (etwa 899 bis 982°C) liegt.

4. Verfahren nach Anspruch 1 oder Anspruch 2, bei dem die genannte vorgegebene Temperatur bei etwa 1800°F (etwa 982°C) liegt.

5. Verfahren nach einem der vorherigen Ansprüche, bei dem das Verhältnis von relativ feinem zu relativ grobem partikulärem Material, das von dem unteren Bereich übertragen wird, durch Regeln des Verhältnisses von relativ feinem zu relativ grobem partikulärem Material im unteren Bereich geregelt wird.

6. Verfahren nach einem der Ansprüche 1 bis 4, bei dem das Verhältnis von relativ feinem zu relativ grobem partikulärem Material, das vom unteren Bereich übertragen wird, durch Regeln des Ablassens von partikulärem Material von einem unteren Teil des unteren Bereiches geregelt wird.

7. Verfahren nach einem der Ansprüche 1 bis 4, umfassend das Ausstoßen von Rauchgasen und mitgeführtem partikulärem Material aus dem oberen Bereich des Ofenendes und Trennen des ausgestoßenen partikulären Materials von den ausgestoßenen Rauchgasen, und bei dem Verhältnis von relativ feinem zu relativ grobem partikulärem Material, das vom unteren Bereich übertragen wird, durch Regeln des Teils an getrenntem partikulärem Material geregelt wird, das in den unteren Bereich wiedereingeleitet wird.

8. Verfahren nach einem der vorherigen Ansprüche, bei dem Brennstoffpartikel im unteren Bereich von flüchtigen Bestandteilen befreit werden, um kohlenstoffhaltiges Material in diesem unteren Bereich zu bilden, und bei dem das kohlenstoffhaltige Material in diesem unteren Bereich geregelt wird, um eine Bildung von N₂O zu verhindern.

9. Verfahren nach Anspruch 8, bei dem
die genannten Brennstoffpartikel mit einer vorgegebenen Rate in den genannten Ofenabschnitt eingeleitet werden;
das genannte Primärgas in den genannten Ofenabschnitt in einer Wirbelgeschwindigkeit eingeleitet wird; und
das genannte kohlenstoffhaltige Material in dem genannten unteren Bereich geregelt wird, indem die genannte Wirbelgeschwindigkeit des genannten Primärgases konstant gehalten wird, während die genannte Rate, mit der die genannten Brennstoffpartikel eingeleitet werden, vorübergehend erhöht wird, um das genannte kohlenstoffhaltige Material in dem genannten unteren Bereich zu erhöhen.

## Revendications

1. Méthode d'exploitation d'un réacteur à lit fluidisé pour abaisser simultanément les émissions de N₂O, de NOₓ et de SOₓ, comprenant la mise en oeuvre d'un lit de matière particulaire dans la zone inférieure d'un four (22), le lit contenant des particules de combustible contenant de l'azote pour la combustion et des particules sorbantes pour la capture du soufre, l'introduction d'un gaz primaire contenant de l'oxygène dans cette zone inférieure du four (22) pour fluidiser le lit de matière particulaire et faire passer une partie de la matière particulaire de la zone inférieure à une zone supérieure du four, et le maintien de la zone inférieure à une température inférieure à environ 1600°F (environ 871°C) pour abaisser les émissions de NOₓ, caractérisée en ce que le rapport de la matière particulaire relativement fine à la matière particulaire relativement grossière dans la zone inférieure est contrôlé de manière à maintenir une température prédéterminée dans la zone supérieure pour réduire les émissions de N₂O formées pendant la combustion tout en permettant la capture efficace du soufre pour abaisser les émissions de SOₓ, et en ce que la zone inférieure du four (22) est exploitée dans des conditions sub-stoechiométriques de telle manière que la combustion des particules de combustible est incomplète et qu'un gaz secondaire contenant de l'oxygène est introduit au-dessus de cette zone inférieure et en dessous de la zone supérieure de telle sorte que la zone supérieure du four (22) est exploitée dans des conditions oxydantes pour achever la combustion des particules de combustible dans cette zone supérieure.

2. La méthode de la Revendication 1, dans laquelle la zone inférieure du lit comprend une zone de reflux des solides au-dessus d'une zone dense et une zone de transport pneumatique au-dessus de la zone de reflux des solides, et dans laquelle le niveau auquel le gaz secondaire contenant de l'oxygène est introduit dans le four (22) est au-dessus de cette zone de reflux des solides.

3. La méthode de l'une des deux revendications précédentes, dans laquelle ladite température prédéterminée est de 1650 à 1800°F (environ 899 à 982°C).

4. La méthode de la Revendication 1 ou de la Revendication 2 dans laquelle ladite température prédéterminée est d'environ 1800°F (environ 982°C).

5. La méthode de l'une quelconque des revendications précédentes dans laquelle le rapport de la matière particulaire relativement fine à la matière particulaire relativement grossière passant de la zone inférieure est contrôlé par la régulation du rapport de la matière particulaire relativement fine à la matière particulaire relativement grossière dans la zone inférieure.

6. La méthode de l'une quelconque des revendications 1 à 4 dans laquelle le rapport de la matière particulaire relativement fine à la matière particulaire relativement grossière passée de la zone inférieure est contrôlé par la régulation du drainage de matière particulaire d'une partie inférieur de la zone inférieure.

7. La méthode de l'une quelconque des revendications 1 à 4 comprenant le déchargement des gaz de carneau et de la matière particulaire entraînée de la zone supérieure du four et la séparation de la matière particulaire déchargée des gaz de carneau déchargés, et dans laquelle le rapport de la matière particulaire relativement fine à la matière particulaire relativement grossière passée de la zone inférieure est contrôlé par la régulation de la partie de matière particulaire séparée qui est réintroduite dans la zone inférieure.

8. La méthode de l'une quelconque des revendications précédentes dans laquelle les particules de combustible sont dévolatilisées dans la zone inférieure pour former un matériau carboné dans cette zone inférieure, et dans laquelle le matériau carboné contenu dans cette zone est contrôlé pour inhiber la formation de N₂O.

9. La méthode de la Revendication 8, dans laquelle
lesdites particules de combustible sont introduites dans ladite section du four à un débit prédéterminé ;
ledit gaz primaire est introduit dans ladite section du four à une vitesse fluidisante ; et
ledit matériau carboné contenu dans ladite zone inférieure est contrôlé en maintenant constante ladite vitesse fluidisante dudit gaz primaire tandis que ledit débit auquel lesdites particules de combustible sont introduites est temporairement augmenté pour augmenter ledit matériau carboné dans ladite zone inférieure.
